# EUROPEAN PATENT APPLICATION

(11) **EP 1 759 790 A2**
(43) Date of publication of application: **07.03.2007**
(21) Application number: 06254483.8
(22) Date of filing: 29.08.2006
(51) Int. Cl.: B22D 45/00

(54) **Apparatus for detecting entry of contaminants during melting**

(30) Priority: 29.08.2005 US 711671 P; 25.04.2006 US 410013
(71) Applicant: Titanium Metals Corporation, Denver CO 80202 (US)
(72) Inventor: Fiore, Daniel F., Sinking Spring, Pennsylvania 19608 (US)
(74) Representative: Powell, Timothy John

(57) **Abstract**

An apparatus for detecting and characterizing contaminants in a high temperature metal melt. The apparatus includes provision for visually monitoring a bath of molten metal within a hearth or a mold to detect instantaneously entry of contaminants to the bath. In addition, the invention provides for characterizing size and location of contaminants in the bath.

## Description

### Background of the Invention

The present invention relates to a system for detecting and characterizing contamination of high temperature metal melts caused by the entry of condensed vapor matter to the molten metal pool. The invention relates generally to the melt processing of high temperature metals, such as those with melting temperatures above 1000°C, and particularly to those processes in which heat is applied directly to the melt surface, as is the case with the cold-hearth refining of metals using an electron beam heat source. This practice is commonly used for the production, recycling and refinement of reactive and refractory metals, such as titanium alloys and nickel-base super alloys. In the electron beam, cold-hearth refining practice charge material is melted under a high intensity electron beam or beams in a water-cooled copper hearth. The melting process is performed under vacuum and is characterized by high-power densities, extremely high attainable melting temperatures, and the ability to accept a wide range of charge materials, including bars, compacts, sponge, scrap and chips. A thin layer of molten metal solidifies on the hearth surface creating a "skull" that protects the hearth, prevents cross-contamination with the copper, and contains the liquid metal pool. Refinement of the molten material is achieved by the evaporation of volatile impurities, sedimentation and entrapment in the skull of high density contaminants, and the dissolution of low density impurities in the super heated surface layer of the melt pool. Molten metal may flow continuously from the metal hearth to a secondary hearth for further refining or it may be cast directly into a mold where it is solidified. Careful control of the melting, refining and solidification stages of this process yields very clean, virtually defect-free castings.

One drawback of this method, however, is that a substantial amount of metal vapor is generated during the melting process due to the high temperatures and vacuum environment. These vapors condense on the interior surfaces of the furnace chamber and form solid deposits that have the potential and propensity to fall back into the melt. This presents a major risk of contamination as the metal vapors are typically rich in the more volatile elements of the melt. Vapor deposits from a titanium alloy containing nominally 6% aluminum, for example, are known to contain as much as 70% aluminum. This disparity in composition may cause significant local property variations and lead to potentially critical defects in final products should the condensate re-enter the melt.

Instances of condensed vapor metal flaking off of the deposition surface and falling into the melt pool are known to occur during normal melting practice. Steps to mitigate the effect of contamination may include temporarily halting the cast and/or the direction of additional heat to the affected area to promote the dissolution of the contaminating material and homogenization of the melt chemistry. These require immediate action on the part of the furnace operator. Any remediation must be effected prior to solidification of the contaminated region and thus instantaneous detection, characterization and response are essential.
Detection of contaminant entries currently relies on visual observation by the furnace operators controlling the melt process. Given that contaminant particles may be small in relation to the melt pool and the operator's attention may be divided among several additional tasks, it is likely that some portion of these entries go undetected by the operators. Of greatest concern are those contaminants that fall directly into the solidification mold and go undetected, as there is very limited capability to refine and homogenize the melt at this late stage of the process.

### SUMMARY OF THE INVENTION

Accordingly, the invention provides a system for constant, uninterrupted visual monitoring of the molten metal bath either in a hearth or mold. It further provides means to instantaneously detect the entry of condensed vapor material from the furnace chamber into the melt pool. It also provides immediate notification to furnace operators as to the presence of contaminant entries so that corrective action may be taken, if necessary, in a timely manner. It provides characterization and a record of the number, size and location of all contaminant entries into the melt and makes this data available subsequently for product quality review.

The apparatus in accordance with the invention for detecting and characterizing contaminants in high temperature metal melts includes means for visually monitoring a bath of molten metal within a hearth or mold to detect instantaneously entry of a condensed contaminant to the bath. Means for providing an instantaneous signal are provided that characterizes size and location of a contaminant within the bath.

The means for visually monitoring includes an infrared video camera.

The instantaneous signal from the infrared video camera is a gray-scale, thermal image of a selected viewing area of the bath of molten metal. The instantaneous signal is directed to a video recorder and monitor.

The instantaneous signal may be also directed to means for analyzing the signal to determine the number, size, location and duration of the contaminant. Means are provided for storage of the number, size, location and duration of the contaminant.

### BRIEF DESCRIPTION OF THE DRAWINGS

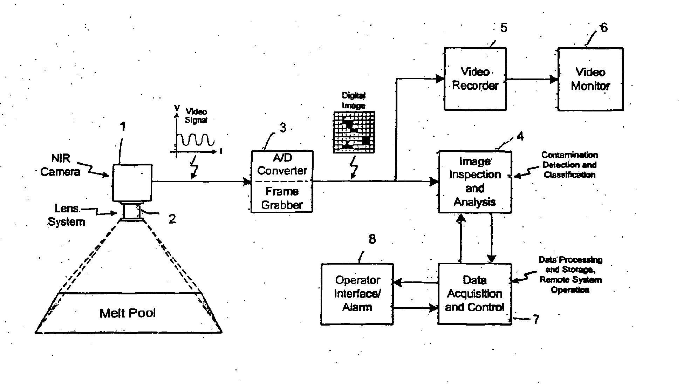

The single Figure of the drawing is a schematic, block diagram of a system for detecting and characterizing contaminants in a high temperature metal melt.

### DESCRIPTION OF THE EMBODIMENT

Referring to the Figure, the detection system consists of a video camera 1 with associated lens package 2, a digital converter 3, a high speed analyzer 4 and a video recorder 5 with an optional monitor 6. This system is integrated with the furnace data acquisition system (DAS) 7 which provides for interfacing with an operator interface 8 and additionally provides for automated system operation.

The camera may be any video camera that operates in the near-infrared (NIR) region of the wavelength spectrum (400nm - 1100 nm). The camera is affixed to an optical housing which mounts to a viewport on the furnace in such a way as to create a vacuum tight seal and provide an unobstructed view normal to the surface of the melt pool. The optical housing contains a fixed focusing lens, an infrared filter to suppress radiation from outside the waveband of interest, and a fixed aperture plate and neutral density filter to reduce the radiation intensity at the detector. A leaded glass window is used to prevent x-ray radiation from damaging the detector array and a disposable quartz window is placed at the very front of the housing to protect the optics from degradation from the heat and vapors from the furnace. The front of the housing is continuously flushed with a flowing gas, such as argon, to prevent metal vapor deposition on the window.

The camera system produces a gray-scale, thermal image of the viewing area. The video signal is output, either directly by high speed serial bus (i.e. firewire) or through a frame grabber, to the digital image analyzer and the video recorder and monitor. The analyzer, an Acuity Powervision System (Nashua, NH) in the present configuration, performs real time, high speed inspection of the video image. A region of interest (ROI) within the video image is defined and all areas of the image outside of the ROI are masked from inspection. In the current application, the ROI is the liquid metal pool contained in the solidification mold. The analyzer characterizes the gray level intensity of the pixels within the ROI and establishes the background intensity level. The detection threshold is determined which defines the boundary between background and foreground pixels. The ROI is then continuously inspected for features (groups of pixels) with intensities below the threshold level, so called foreground pixels, which represent lower temperature, solid contaminants in the molten metal pool. The analyzer operates at a rate of at least 4 scans per second to ensure adequate resolution of contaminant entries, and is able to extract a wide range of information from the image including the number, size, location and duration of contaminant entries. This data is transmitted to the furnace data acquisition system.

Data from the analyzer is continuously processed, compiled and stored by the DAS. Image data is filtered to suppress transient detections, ignore very small entries, and reduce the occurrence of nuisance alarms. In the event of contamination, the DAS provides an instantaneous audible alarm to the furnace operator as well as a visual prompt indicating the size and location of the entry. The operator can then quickly evaluate the entry and, if necessary, take the prescribed action to remediate the contamination.

Integration with the DAS enables control of and communication with the condensate detection system through a central operator interface and eliminates redundant data entry and setup tasks. It also allows automated execution of system functions based on furnace and melt parameters. The DAS, for example, supplies the mold geometry on which the ROI is based, automatically initiates image inspection at the start of the melt process and shuts the detection system down when the melt power is turned off at the conclusion of casting. This makes for virtually transparent operation of the detection system. The stored data from the image analyzer becomes a permanent record for customer and quality review.

The above description makes particular reference to application in conjunction the solidification mold, however, it is intended that the invention could be applied, with little modification, to the melting and/or refining hearths in the EBM process.

It is also recognized that the data produced by the image analyzer could be output to a computer controlled beam guidance system, in furnaces so equipped, to automatically direct additional beam energy to the affected area of the melt in order to enhance dissolution and diffusion of the contaminant.

## Claims

1. Apparatus for detecting and characterizing contaminants in high temperature metal melts comprising:
means for visually monitoring a bath of molten metal within a hearth or mold to detect instantaneously entry of a condensed contaminant to the bath;
means for providing an instantaneous signal characterizing size and location of contaminant within the bath.

2. The apparatus of claim 1, wherein said means for visually monitoring includes an infrared video camera.

3. The apparatus of claim 2, wherein said instantaneous signal from said infrared video camera is a gray-scale, thermal image of a selected viewing area of the bath of molten metal.

4. The apparatus of claim 3, wherein said instantaneous signal is directed to a video recorder and monitor.

5. The apparatus of claim 4, wherein said instantaneous signal is also directed to means for analyzing the signal to determine number, size, location and duration of the contaminant.

6. The apparatus of claim 5, wherein said number, size, location and duration of the contaminant are directed to means for storage thereof.
